# EUROPÄISCHE PATENTANMELDUNG

(11) **EP 2 093 096 A2**
(43) Veröffentlichungstag der Anmeldung: **26.08.2009**
(21) Anmeldenummer: 08171807.4
(22) Anmeldetag: 16.12.2008
(51) Int. Cl.: B60L 5/00

(54) **Druckluftversorgungseinrichtung für einen Stromabnehmer**

(30) Priorität: 04.02.2008 DE 102008007470
(71) Anmelder: Siemens Aktiengesellschaft, 80333 München (DE)
(72) Erfinder: Giolda, Walter, 91058, Erlangen (DE); Stretz, Manfred, 91058, Erlangen (DE)

(57) **Zusammenfassung**

Die Erfindung betrifft eine Druckluftversorgungseinrichtung für einen Stromabnehmer eines Schienenfahrzeuges, mit einem Druckbehälter (DB), der auf seiner Eingangsseite von einer Druckhauptleitung (HD) aus mit Druck beaufschlagt wird und auf seiner Ausgangsseite über ein Ventil (M) mit einem pneumatischen Hebeantrieb für den Stromabnehmer verbunden ist, wobei
die Eingangsseite des Druckbehälters (DB) mit einer Druckluftflasche (DF) verbunden ist, deren Druck so bemessen ist, dass der Druckbehälter (DB) hilfsweise über die Druckluftflasche (DF) mit Druck zu versorgen ist.

## Beschreibung

Die Erfindung bezieht sich auf eine Druckluftversorgungseinrichtung für einen Stromabnehmer eines Schienenfahrzeugs, mit einem Druckbehälter, der auf seiner Eingangsseite von einer Druckhauptleitung aus mit Druck beaufschlagt wird und auf seiner Ausgangsseite über ein Ventil mit einem pneumatischen Hebeantrieb für den Stromabnehmer verbunden ist.

Stromabnehmer von Schienenfahrzeugen werden typischer Weise pneumatisch angehoben, um einen elektrischen Kontakt zu einer Oberleitung herzustellen.

Ein Betrieb des zugehörigen Hebeantriebes für den Stromabnehmer erfolgt normaler Weise über eine Druckluftversorgung, deren Druckluft über einen Hauptluftpresser erzeugt wird. In anderen Fällen kann auch eine Fremdeinspeisung von Druckluft erfolgen, um den Stromabnehmer anzuheben.

Es treten jedoch auch Betriebsfälle auf, bei denen aus der allgemeinen Druckluftversorgung zu wenige Druckluftreserven abrufbar sind bzw. eine Fremdeinspeisung nicht zur Verfügung steht. In solchen Fällen ist eine Vorrichtung erforderlich, um hilfsweise die zum Anheben des Stromabnehmers benötigte Druckluft zu erzeugen.

Zu diesem Zweck ist intern der Anmelderin vorgeschlagen worden, einen Hilfsluftpresser vorzusehen, über den benötigte Druckluft erzeugt werden kann. Eine Alternative dazu, die wesentlich kostengünstiger ist, besteht aus einer Handpumpe, deren Betätigung zum Anheben des Stromabnehmers führt.

Während der Hilfsluftpresser eine sehr kostenintensive Lösungsmöglichkeit zum Bereitstellen von Druckluft ist, ist die Verwendung der Handpumpe sehr mühsam, da diese typischer Weise ca. 100 Mal zu betätigen ist, um den Stromabnehmer in seine Hebeposition zu verbringen.

Ausgehend hiervon liegt der Erfindung die Aufgabe zugrunde, eine Druckluftversorgungseinrichtung der eingangs genannten Art derart weiterzuentwickeln, dass sie kostengünstig und einfach handhabbar ist.

Die Aufgabe wird dadurch gelöst, dass die Eingangsseite des Druckbehälters mit einer Druckluftflasche verbunden ist, deren Druck so bemessen ist, dass der Druckbehälter hilfsweise über die Druckluftflasche mit Druck zu versorgen ist.

Die Lösung sieht damit vor, für den Hilfsfall eine gesonderte Druckluftquelle, nämlich die in einfacher Weise käuflich zu erwerbende Druckluftflasche vorzusehen, deren Kosten vergleichsweise niedrig sind. Die Druckluftflasche kann über eine einfache Verschraubung mit der Eingangsseite des Druckbehälters verbunden werden. Beim Einschrauben der Druckluftflasche öffnet sich deren Ventil und gibt das Gasvolumen der Druckluftflasche frei.

Bevorzugt ist die Eingangsseite des Druckbehälters über einen Druckminderer mit der Druckluftflasche verbunden. Dies dient zum Schutz der Pneumatik des Stromabnehmers.

Die Eingangsseite des Druckbehälters kann mit einem Absperrventil zwischen Druckluftflasche und Druckbehälter versehen sein. Dies dient dazu, den Zeitpunkt der Expansion des Gases aus der Druckluftflasche unabhängig vom Zeitpunkt des Anschließens der Flasche an das Leitungssystem zu bestimmen.

Die Eingangsseite des Druckbehälters kann über ein Rückschlagventil mit der Druckluftflasche verbunden sein. Dies hat den Zweck, dass ein Überdruck in der Leitung zur Eingangsseite des Druckbehälters nicht dazu führt, dass Luft bei nicht angeschlossener Druckluftflasche und nicht vorhandenem oder geöffnetem Absperrventil aus der Leitung ausströmt.

Außerdem kann vorgesehen sein, dass die Ausgangsseite der Druckluftflasche mit einem Hauptschalter der Druckluftversorgung verbunden ist.

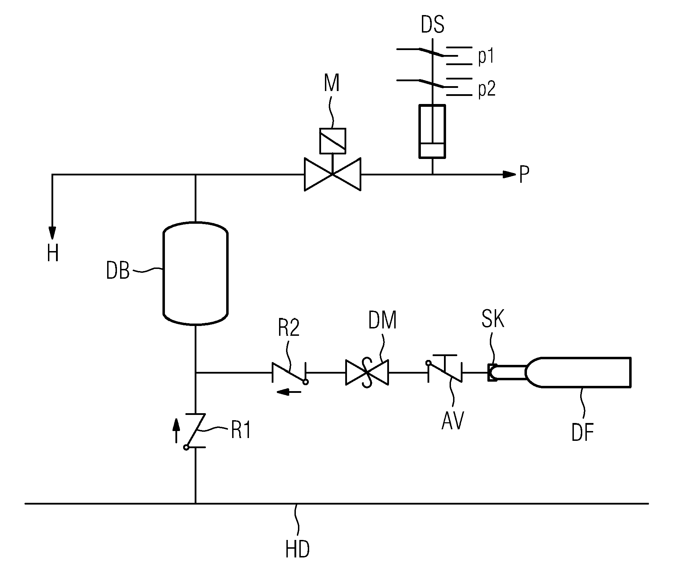

Ein Ausführungsbeispiel der Erfindung wird nachfolgend unter Bezugnahme auf die Zeichnung noch näher beschrieben. Die einzige Figur zeigt eine schematische Darstellung einer Druckluftversorgungseinrichtung für einen Stromabnehmer eines Schienfahrzeugs.

Zentrales Element der Druckluftversorgungseinrichtung für einen Stromabnehmer P eines Schienenfahrzeugs ist ein Druckbehälter DB. Dieser Druckbehälter ist dafür erforderlich, in kurzer Zeit einen sehr hohen Druck bereitzustellen, so dass ein Hebeantrieb den Stromabnehmer P zur Herstellung eines Kontaktes mit einer Oberleitung anheben kann.

Eine Eingangsseite des Druckbehälters DB ist über ein Rückschlagventil R1 mit einer Hauptdruckleitung HD verbunden, in der typischer Weise ein Luftdruck von 8,5 bis 10 bar herrscht. Diese Druckluft wird von einem Hauptpresser bereitgestellt, der grundsätzlich die Funktion der Druckluftversorgung für das Schienenfahrzeug insgesamt übernimmt. Im Regelfall wird der Stromabnehmer P mit Hilfe von Druckluft angehoben, die von dem Hauptpresser bereitgestellt wurde.

Bei einem Ausfall des Hauptpressers ist eine Hilfsversorgung für den Hebeantrieb des Stromabnehmers P vorzusehen. Zu diesem Zweck ist die Eingangsseite des Druckbehälters DB über ein Rückschlagventil R2 und/oder ein Absperrventil AV mit einer Schnellkupplung SK verbunden. An diese Schnellkupplung SK ist eine dem Standard entsprechende Druckluftflasche DF angeschlossen, und zwar über einen Druckminderer DM.

Eine Versorgung des Druckbehälters DB mit Druckluft kann somit wahlweise über die Druckhauptleitung HD oder über die Druckluftflasche DF erfolgen. Im Bedarfsfall beim Einsatz mehrerer Stromabnehmer in einem Schienenfahrzeug können auch mehrere Druckluftflaschen vorgesehen sein.

Wenn ein Absperrventil AV vorhanden ist, kann die Druckluftflasche generell an das Leitungssystem angeschlossen sein. Im Bedarfsfall muss dann lediglich das Ventil AV geöffnet werden.

Bei Anordnung ohne Absperrventil AV darf die Druckluftflasche erst im Bedarfsfall an das Leitungssystem angeschlossen werden, da in diesem Fall sofort das Gasvolumen aus der Druckluftflasche DF in das Leitungssystem expandiert.

Eine Ausgangsseite des Druckbehälters DB ist über ein Magnetventil M mit dem Hebeantrieb für den Stromabnehmer P verbunden. Das Magnetventil M dient dazu, die Druckluft in den Hebeantrieb des Stromabnehmers P strömen zu lassen und den Anhebevorgang dadurch auszulösen.

Die Ausgangsseite des Druckbehälters DB ist außerdem mit einem Hauptschalter H verbunden. Dessen Aufgabe besteht darin, den Hauptschalter H ebenfalls pneumatisch zu schalten. Somit wird der Hauptschalter H ebenfalls mit der genannten Druckluftversorgung aus der Druckluftflasche DF mit versorgt.

Der Druckschalter DS mit elektrischen Kontakten dient als Rückmeldung des vorhandenen Druckes an die Fahrzeugsteuerung.

## Patentansprüche

1. Druckluftversorgungseinrichtung für einen Stromabnehmer (P) eines Schienenfahrzeuges, mit einem Druckbehälter (DB), der auf seiner Eingangsseite von einer Druckhauptleitung (HD) aus mit Druck beaufschlagt wird und auf seiner Ausgangsseite über ein Ventil (M) mit einem pneumatischen Hebeantrieb für den Stromabnehmer verbunden ist,
**dadurch gekennzeichnet, dass**
die Eingangsseite des Druckbehälters (DB) mit einer Druckluftflasche (DF) verbunden ist, deren Druck so bemessen ist, dass der Druckbehälter (DB) hilfsweise über die Druckluftflasche (DF) mit Druck zu versorgen ist.

2. Druckluftversorgungseinrichtung nach Anspruch 1,
**dadurch gekennzeichnet, dass**
die Eingangsseite des Druckbehälters (DB) über einen Druckminderer (DM) mit der Druckluftflasche (DF) verbunden ist.

3. Druckluftversorgungseinrichtung nach einem der Ansprüche 1 oder 2,
**dadurch gekennzeichnet, dass**
die Eingangsseite des Druckbehälters (DB) über ein Rückschlagventil (R2) mit der Druckluftflasche (DF) verbunden ist.

4. Druckluftversorgungseinrichtung nach einem der Ansprüche 1 bis 3,
**dadurch gekennzeichnet, dass** die Eingangsseite des Druckbehälters (DB) über ein Absperrventil (AV) mit der Druckluftflasche (DF) verbunden ist.

5. Druckluftversorgungseinrichtung nach einem der Ansprüche 1 bis 4,
**dadurch gekennzeichnet, dass**
der Druckbehälter (DB) auf seiner Ausgangsseite mit einem Hauptschalter (H) für eine Druckluftversorgung verbunden ist.
